# EUROPEAN PATENT APPLICATION

(11) **EP 3 985 178 A1**
(43) Date of publication of application: **20.04.2022**
(21) Application number: 20846390.1
(22) Date of filing: 22.06.2020
(51) Int. Cl.: E02F 9/20

(54) **SYSTEM FOR DETERMINING CONTENT OF WORK PERFORMED BY CONSTRUCTION MACHINE AND METHOD FOR DETERMINING WORK**

(30) Priority: 29.07.2019 JP 2019138433
(71) Applicant: KOBELCO CONSTRUCTION MACHINERY CO., LTD., Hiroshima-shi Hiroshima 731-5161 (JP)
(72) Inventor: FUJIWARA, Sho, Saeki-ku, Hiroshima-shi Hiroshima 731-5161 (JP); HOSO, Yukihiro, Saeki-ku, Hiroshima-shi Hiroshima 731-5161 (JP); KYU, Shingun, Saeki-ku, Hiroshima-shi Hiroshima 731-5161 (JP); YOSHIHARA, Hideki, Saeki-ku, Hiroshima-shi Hiroshima 731-5161 (JP); YAMASHITA, Koji, Saeki-ku, Hiroshima-shi Hiroshima 731-5161 (JP)
(74) Representative: TBK
(86) International application number: PCT/JP2020/024282
(87) International publication number: WO 2021/019949

(57) **Abstract**

A work content determination system (20) determines a work content of a construction machine (100) at a work site. This work content determination system (20) includes: an image-capturing device (30) that acquires an image including the construction machine (100) at the work site; and an image processing device (40) that determines the work content of the construction machine (100) based on a time-series change in the image acquired by the image-capturing device (30) and outputs the work content.

## Description

### Technical Field

The present invention relates to a work content determination system for determining a work content of a construction machine.

### Background Art

As a method for determining a work content of a construction machine, Patent Literature 1 discloses an excavator processing device and a work content determination method. In the device and method of this Patent Literature 1, a plurality of sensors mounted on a construction machine measure a plurality of operation variables depending on an operation state of the construction machine, and the processing device determines a work content at the time when the operation variable is detected based on a temporal change of the operation variable.

However, since construction machines of various manufacturers and various types of construction machines are used at a work site where work is performed using construction machines, there is a case where the construction machine that becomes a target determined for the work content does not include a sensor that can measure the operation variable. In this case, a sensor for determining the work content needs to be newly mounted on the construction machine.

### Citation List

### Patent Literature

Patent Literature 1: JP 2018-159268 A

### Summary of Invention

The present invention has been made to solve the above problems, and an object of the present invention is to provide a work content determination system that can determine the work content of a construction machine while not requiring a sensor for determining the work content of the construction machine to be newly mounted on the construction machine or minimizing the necessity of newly mounting the sensor on the construction machine.

A work content determination system according to one aspect of the present invention is a work content determination system for determining a work content of a construction machine at a work site, the system including: an image-capturing device that acquires an image including the construction machine at the work site; and an image processing device that determines the work content of the construction machine based on a time-series change in the image acquired by the image-capturing device and outputs the work content.

### Brief Description of Drawings

FIG. 1 is a view illustrating an outline of a work content determination system according to an embodiment of the present invention.
FIG. 2 is a perspective view illustrating a hydraulic excavator that is an example of a construction machine that is a determination target of a work content by the work content determination system.
FIG. 3 is a block diagram illustrating a configuration of the work content determination system.
FIG. 4 is a view for explaining processing of estimating a posture of the construction machine in the work content determination system.
FIG. 5 is a view illustrating data of a time-series change in posture of the construction machine in the work content determination system.
FIG. 6 is a view for explaining a definition of an angle of an attachment.
FIG. 7 is a view for explaining processing of determining the work content from data of a time-series change in posture of the construction machine in the work content determination system.
FIG. 8 is a view illustrating a work classification result aggregated based on a work content determined in the work content determination system.
FIG. 9 is a view illustrating an example of a work history stored in a work history storage unit of the work content determination system.
FIG. 10 is a view illustrating another example of a work history stored in the work history storage unit of the work content determination system.
FIG. 11 is a flowchart presenting calculation processing performed by an image processing device of the work content determination system.
FIG. 12 is a view for explaining a camera attached to a machine body of the construction machine in a work content determination system according to a modification of the embodiment.

### Description of Embodiments

An embodiment of the present invention will be described below with reference to the drawings. Note that the following embodiment is merely an example embodying the present invention and does not limit the technical scope of the present invention.

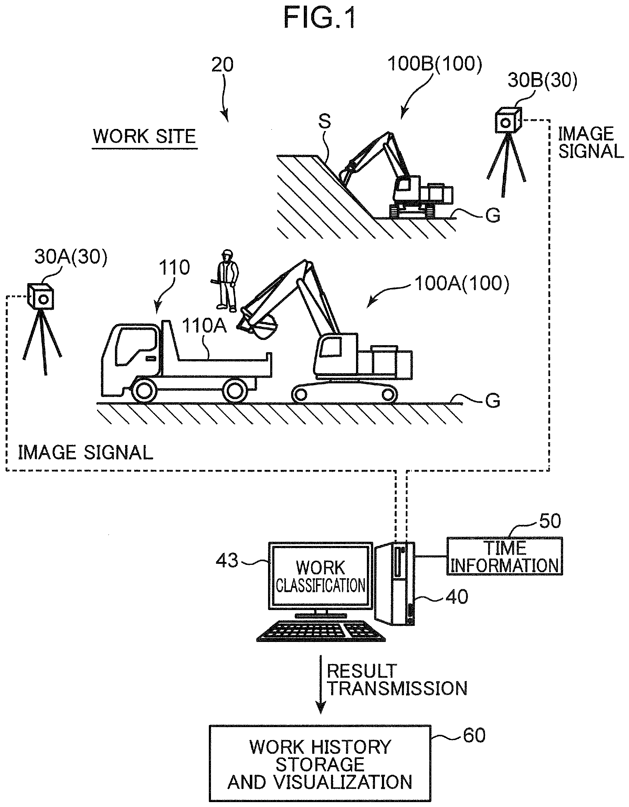

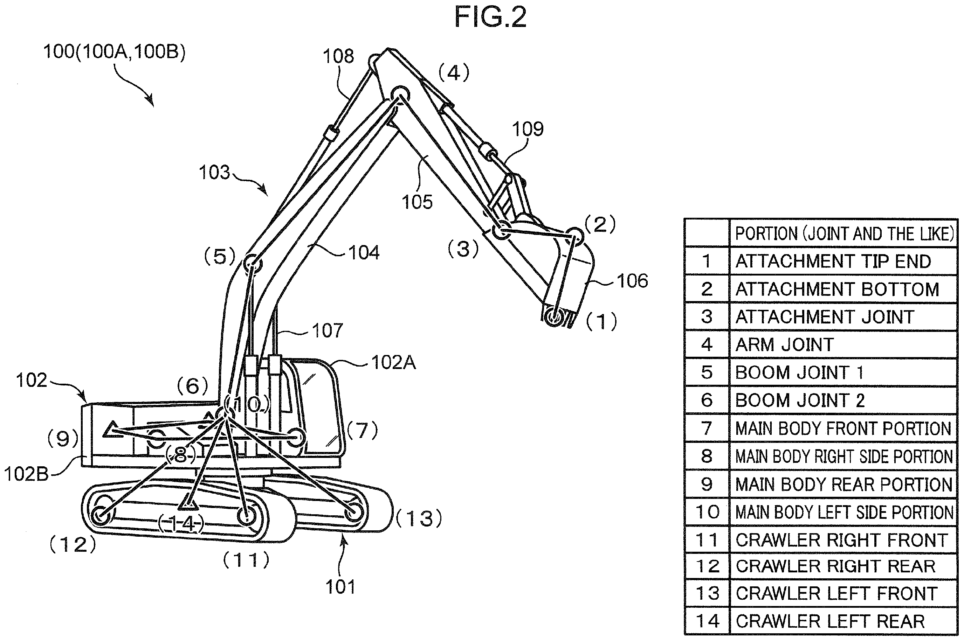

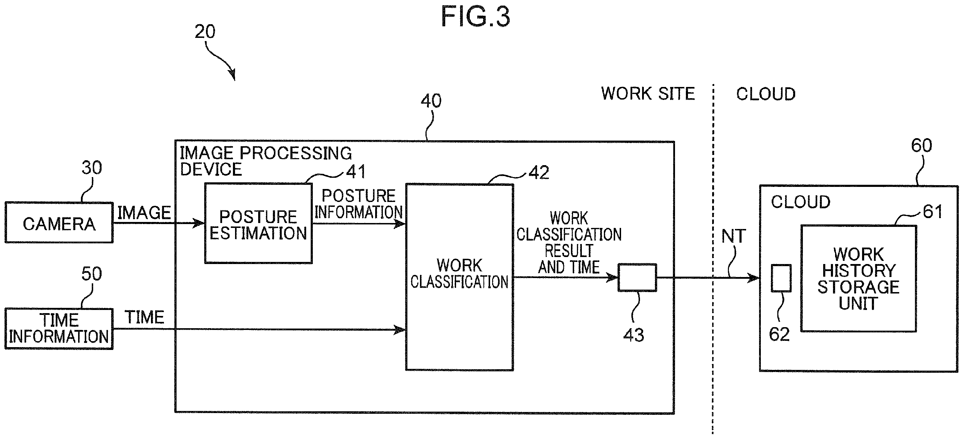

FIG. 1 is a view illustrating an outline of a work content determination system 20 according to the present embodiment. FIG. 2 is a perspective view illustrating a construction machine 100 that is a determination target of a work content by the work content determination system 20. FIG. 3 is a block diagram illustrating a configuration of the work content determination system 20.

The work content determination system 20 is a system for determining the work content of the construction machine 100 at a work site. In the specific example illustrated in FIG. 1, the work content determination system 20 determines the work content of each of a plurality of hydraulic excavators (a first hydraulic excavator 100A and a second hydraulic excavator 100B) at the work site. Each of the hydraulic excavators 100A and 100B is an example of the construction machine 100.

As illustrated in FIG. 2, each of the hydraulic excavators 100A and 100B includes a crawler type lower travelling body 101, an upper slewing body 102 mounted on the lower travelling body 101 so as to be slewable about a slewing center axis perpendicular to a travelling surface thereof, and an attachment 103 mounted on the upper slewing body 102. The attachment 103 includes a boom 104 supported by the upper slewing body 102 in a hoisting manner, an arm 105 rotatably coupled to a tip end of the boom 104, and a tip end attachment 106 rotatably coupled to a tip end of the arm 105.

In the present embodiment, the tip end attachment 6 is a bucket. The lower travelling body 101 is an example of a base body, and the lower travelling body 101 and the upper slewing body 102 are an example of a machine body. The upper slewing body 102 includes a cab 102A constituting a main body front portion, which is a front portion of the machine body, and a counterweight 102B constituting a main body rear portion, which is a rear portion of the machine body.

Each of the hydraulic excavators 100A and 100B includes a boom cylinder 107 that operates to cause the boom 104 to perform a hoisting operation with respect to the upper slewing body 102, an arm cylinder 108 that operates to cause the arm 105 to perform a rotating operation with respect to the boom 104, and a tip end attachment cylinder 109 that operates to cause the tip end attachment 106 to perform a rotating operation with respect to the arm 105.

In a case where the construction machine 100 is a hydraulic excavator, the work at the work site includes, for example, drilling work, grading work, slope shaping work, loading work, traveling (traveling work), and vehicle resting. As illustrated in FIG. 1, the first hydraulic excavator 100A performs drilling work, which is a work of drilling earth and sand on a ground G, and loading work, which is a work of loading the earth and sand drilled and held by the tip end attachment 106 (bucket) onto a load-carrying platform 110A of a dump truck 110. The second hydraulic excavator 100B performs slope shaping work, which is a work of shaping a slope surface that is an artificial slope formed by cutting earth or banking earth. The traveling work is a work for moving the construction machine 100 to a next work place at the work site. The vehicle resting means a state in which the construction machine 100 is stopped without performing actual work such as drilling work, grading work, slope shaping work, loading work, and traveling work.

The work content determination system 20 includes a plurality of cameras 30, an image processing device 40, a time stamp unit 50, and a server 60.

The plurality of cameras 30 include a first camera 30A disposed at a position where an image including the first hydraulic excavator 100A at the work site can be acquired, and a second camera 30B disposed at a position where an image including the second hydraulic excavator 100B at the work site can be acquired. Each of the first and second cameras 30A and 30B is an example of an image-capturing device. Each camera 30 periodically captures images at predetermined time intervals, and data (image signal) regarding an image acquired by each camera 30 is sequentially input to the image processing device 40 by a wireless communication means or a wired communication means.

The time stamp unit 50 has a function of inputting time information to a work content determination unit 42 described later. The time stamp unit 50 may be included in the image processing device 40, may be included in each camera 30 constituting the image-capturing device, or may be configured as a device separate from the image processing device 40 and the image-capturing device.

The image processing device 40 determines the work content of the first hydraulic excavator 100A, determines the work content of the second hydraulic excavator 100B, and outputs these work contents. The image processing device 40 includes a computer including a processor such as a CPU, a memory, and a communication unit 43. The image processing device 40 includes a posture estimation unit 41 and the work content determination unit 42 as functions.

The posture estimation unit 41 estimates a posture of the first hydraulic excavator 100A based on the image acquired by the first camera 30A. Similarly, the posture estimation unit 41 estimates a posture of the second hydraulic excavator 100B based on the image acquired by the second camera 30B. That is, the posture estimation unit 41 estimates the posture corresponding to the image acquired by each camera 30. Specifically, in the present embodiment, the posture estimation unit 41 estimates a posture of the boom 104, a posture of the arm 105, a posture of the tip end attachment 106, a posture of the lower travelling body 101, and a posture of the upper slewing body 102 based on the images acquired by the first and second cameras 30A and 30B. Data (posture information) regarding the posture estimated by the posture estimation unit 41 is input to the work content determination unit 42.

Specifically, by inputting the image to a neural network (e.g., convolutional neural network) having a multilayer structure machine-learned by deep learning, for example, the posture estimation unit 41 extracts a plurality of feature points of the construction machine 100 included in the image. That is, the neural network is a posture estimation algorithm learned in advance using data regarding a feature point of the construction machine 100. The neural network referred to by the posture estimation unit 41 learns by, for example, learning processing with training data indicating a correspondence relationship between an image of the construction machine 100 (hydraulic excavator) and coordinates of the feature point in the image.

FIG. 2 illustrates an example of the plurality of feature points of the construction machine 100. In the neural network according to the present embodiment, a plurality of feature points of the construction machine 100 (hydraulic excavator) include an attachment tip end (1), an attachment bottom (2), an attachment joint (3), an arm joint (4), a boom joint 1 (5), a boom joint 2 (6), a main body front portion (7), a main body right side portion (8), a main body rear portion (9), a main body left side portion (10), a crawler right front (11), a crawler right rear (12), a crawler left front (13), and a crawler left rear (14). Note that the attachment tip end (1), the attachment bottom (2), and the attachment joint (3) indicate a tip end of the bucket 106, a bottom of the bucket 106, and a joint of the bucket 106, respectively. In FIG. 2, the main body left side portion (10) is not illustrated.

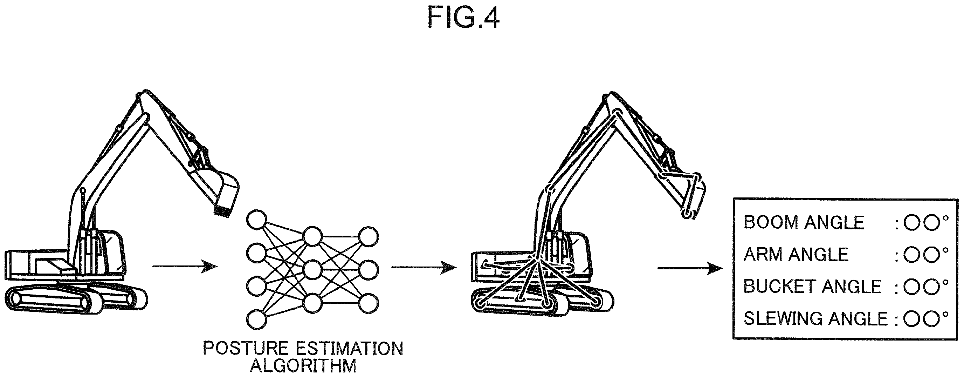

FIG. 4 is a view for explaining processing of estimating a posture of the construction machine 100 in the work content determination system 20. As illustrated in FIG. 4, the neural network (posture estimation algorithm) extracts and outputs coordinates of each of the plurality of feature points based on an image of the construction machine 100 to be input. Then, based on coordinates of the plurality of feature points output from the neural network, the posture estimation unit 41 estimates the posture of the construction machine 100, specifically, the posture of the boom 104, the posture of the arm 105, the posture of the tip end attachment 106, the posture of the lower travelling body 101, and the posture of the upper slewing body 102.

The posture of the boom 104 is specified by an angle (boom angle) of the boom 104 with respect to the upper slewing body 102, for example. The posture of the arm 105 is specified by an angle (arm angle) of the arm 105 with respect to the boom 104, for example. The posture of the tip end attachment 106 is specified by an angle (bucket angle) of the bucket 106 with respect to the arm 105, for example. The posture of the lower travelling body 101 and the posture of the upper slewing body 102 are specified by an angle (slewing angle) of the upper slewing body 102 with respect to the lower travelling body 101, for example. Data (posture information) regarding the posture estimated by the posture estimation unit 41 is input to the work content determination unit 42.

Note that the posture estimation unit 41 may estimate the posture of the construction machine based on the image acquired by the image-capturing device by using a technology such as Openpose (registered trademark), for example.

The work content determination unit 42 gives time information to the posture information corresponding to each image based on the posture information corresponding to each image and time information to be input from the time stamp unit 50. The work content determination unit 42 can give time information to posture information estimated based on data regarding images acquired periodically at predetermined time intervals by each camera 30, i.e., each piece of periodic posture information obtained at predetermined time intervals. Due to this, the work content determination unit 42 can create the time-series data of the posture. Note that the time interval of image capturing by each camera 30 is set to, for example, 1/60 seconds, 1/30 seconds, 1/10 seconds, 1 second, or the like.

Based on time-series change in the posture (time-series data of the posture) of the first hydraulic excavator 100A estimated by the posture estimation unit 41, the work content determination unit 42 determines the work content performed by the first hydraulic excavator 100A. Similarly, based on time-series change in the posture (time-series data of the posture) of the second hydraulic excavator 100B estimated by the posture estimation unit 41, the work content determination unit 42 determines the work content performed by the second hydraulic excavator 100B. The image processing device 40 inputs the work content determined by the work content determination unit 42 to the server 60.

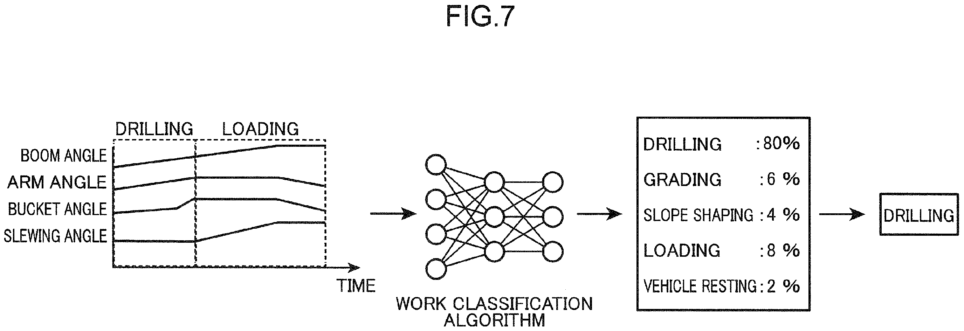

Specifically, by inputting time-series data of the posture to a neural network (e.g., recurrent neural network) having a multilayer structure machine-learned by deep learning, for example, the work content determination unit 42 extracts a feature included in time-series data of the posture. That is, the neural network is a work classification algorithm learned in advance using time-series data regarding movement of a feature point of the construction machine 100. The neural network referred to by the work content determination unit 42 learns by, for example, learning processing based on training data indicating a correspondence relationship between a plurality of work content candidates defined in advance and time-series data of the posture of the construction machine 100 having been tagged. The plurality of work content candidates defined in advance include, for example, drilling work, grading work, slope shaping work, and loading work (see FIG. 7).

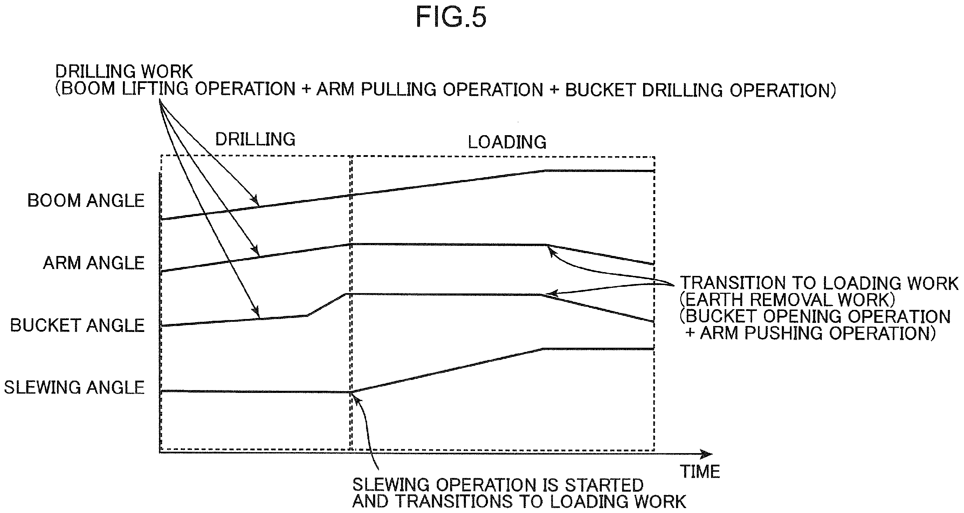

FIG. 5 is a view illustrating a time-series change in posture (time-series data of the posture) of the construction machine 100 in the work content determination system 20. The specific example illustrated in FIG. 5 illustrates time-series data (time-series data of posture) regarding the boom angle, the arm angle, the bucket angle, and the slewing angle.

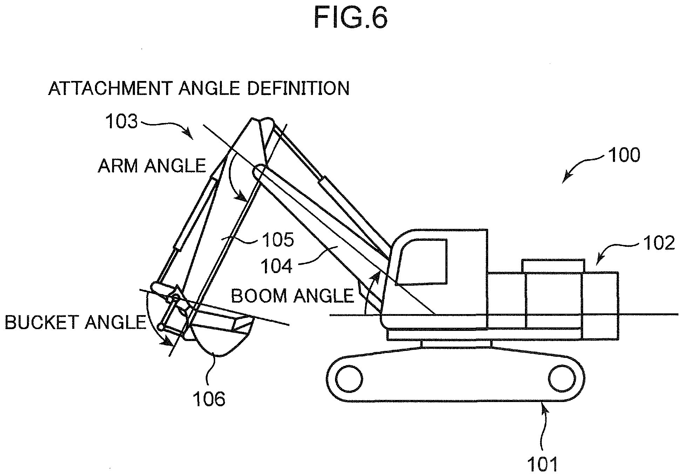

FIG. 6 is a view for explaining the definition of the angle of the attachment 103. As illustrated in FIG. 6, the boom angle is, for example, an angle formed by a plane orthogonal to a slewing center of the upper slewing body 102 and a straight line extending along a longitudinal direction of the boom 104. The arm angle is, for example, an angle formed by the straight line extending along the longitudinal direction of the boom 104 and a straight line extending along the longitudinal direction of the arm 105. The straight line extending along the longitudinal direction of the arm 105 is, for example, a straight line connecting a rotation center (center of a coupling pin) of the coupling portion between the tip end portion of the boom 104 and the base end portion of the arm 105 and a rotation center (center of a coupling pin) of a coupling portion between the tip end portion of the arm 105 and the base end portion of the bucket 106. The bucket angle is, for example, an angle formed by the straight line extending along the longitudinal direction of the arm 105 and a preset straight line defining the direction of the bucket 106. The straight line that defines the direction of the bucket 106 is, for example, a straight line connecting a rotation center (center of a coupling pin) of the coupling portion between the tip end portion of the arm 105 and the base end portion of the bucket and a tip end portion of the bucket (e.g., a toe portion of the bucket). The slewing angle is defined with reference to, for example, a position (phase) where an advancing direction of the lower travelling body 101 coincides with a front of the upper slewing body 102 (direction in which the attachment 103 extends).

The specific example illustrated in FIG. 5 illustrates a time-series change in posture (time-series data of the posture) of the construction machine 100 when the drilling work is performed, and a time-series change in posture (time-series data of the posture) of the construction machine 100 when the loading work to be performed after this drilling work is performed. Each of these works is performed with a specific time-series change in terms of the posture of the construction machine 100. Therefore, a time-series change in the posture of the construction machine 100 is relevant to the work content of the construction machine 100, and serves as an index for determination of the work content. A specific explanation is as follows.

Since the drilling work does not involve a slewing operation, the slewing angle is constant in the drilling work as illustrated in FIG. 5. The boom angle and the arm angle gradually increase from the early stage to the final stage of the drilling work. The bucket angle gradually increases from the early stage to the middle stage of the drilling work, and greatly increases at the final stage.

Since the loading work involves a slewing operation, the slewing angle starts to increase when the drilling work is switched to the loading work. The slewing angle and the boom angle gradually increase from the early stage to the middle stage of the loading work, and the arm angle and the bucket angle are constant from the early stage to the middle stage of the loading work. On the other hand, the slewing angle and the boom angle are constant at the final stage of the loading work, and the arm angle and the bucket angle gradually decrease at the final stage of the loading work.

FIG. 7 is a view for explaining processing of determining the work content from time-series data of the posture of the construction machine 100 in the work content determination system 20. As illustrated in FIG. 7, an output layer of the neural network (work classification algorithm) executes calculation by a softmax function, for example, and outputs a score for each of the plurality of work content candidates. The work content determination unit 42 decides, as the work content, the work content candidate having the highest score based on the score of each of the plurality of work content candidates having been output from the output layer of the neural network. In the specific example of FIG. 7, the work content determination unit 42 determines "drilling work", having the highest score, among the plurality of work content candidates as the work content.

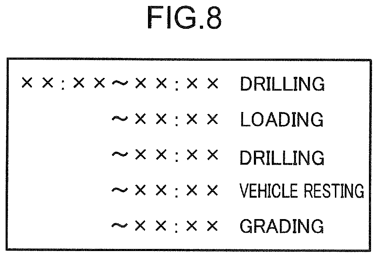

FIG. 8 is a view illustrating a work classification result aggregated based on a determined work content. As illustrated in FIG. 8, the work content determination unit 42 determines a work content of one day for each construction machine 100, for example, and generates a work classification as illustrated in FIG. 8. The work classification illustrated in FIG. 8 is aggregation of work contents for each time slot of day. The image processing device 40 transmits data of work content including the work classification to the server 60.

As illustrated in FIG. 3, the server 60 is a device (storage visualization device) having a function of storing, as a history, data of the work content output from the image processing device 40 and a visualization function of allowing a terminal that is not illustrated connectable to the server 60 to display the history. The terminal is used by the work-related persons, and includes a computer such as a personal computer.

The server 60 is communicably connected to the image processing device 40 via a communication path NT. The communication path NT includes, for example, a long distance information communication network such as the Internet and a mobile phone communication network. The communication path NT may include, for example, a communication network that enables the image processing device 40 and the server 60 to wirelessly communicate at a distance of about several tens of meters to several hundreds of meters, such as specified low power radio, Bluetooth (registered trademark), and wireless local area network (wireless LAN). However, these communication paths are an example, and the communication path NT may be, for example, a wired communication network.

The server 60 includes a computer including a processor such as a CPU, a work history storage unit 61, and a communication unit 62. The server 60 receives, at the communication unit 62, data regarding the work content transmitted from the communication unit 43 of the image processing device 40.

The work history storage unit 61 stores data regarding the work content having been received.

The server 60 receives a request for requesting browsing of the history from the terminal used by the work-related persons, for example. The request includes an access code of the work-related persons. The server 60 transmits the history to the terminal when the access code of the work-related persons matches an access code stored in advance in the memory of the server 60. Thus, the history is displayed on the terminal.

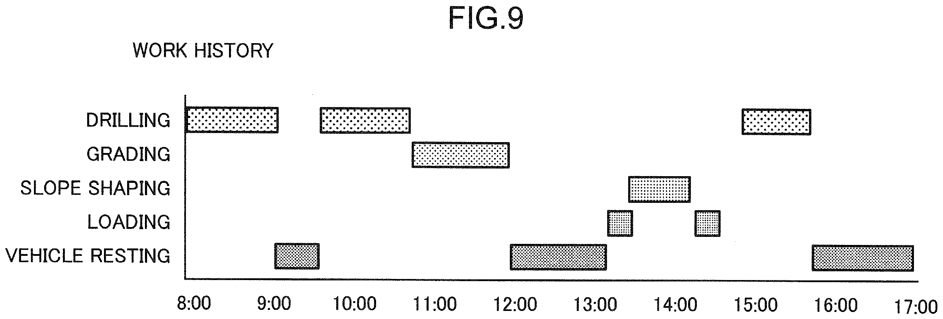

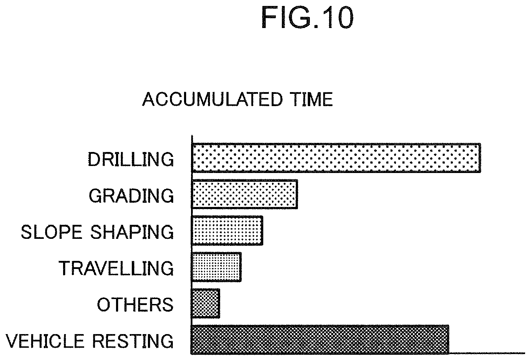

FIG. 9 is a view illustrating an example of a work history stored in the work history storage unit 61 of the work content determination system 20, and illustrates a work performance in one day of a certain construction machine 100. FIG. 10 is a view illustrating another example of a work history stored in the work history storage unit 61 of the work content determination system 20, and illustrates, for example, a past work performance (accumulated time) of a certain operator. The server 60 transmits history data as illustrated in FIGS. 9 and 10, for example, to the terminal, and the terminal displays the history data having been received.

Next, an operation of the work content determination system 20 in the present embodiment will be described. FIG. 10 is a flowchart presenting calculation processing performed by the image processing device 40 of the work content determination system 20.

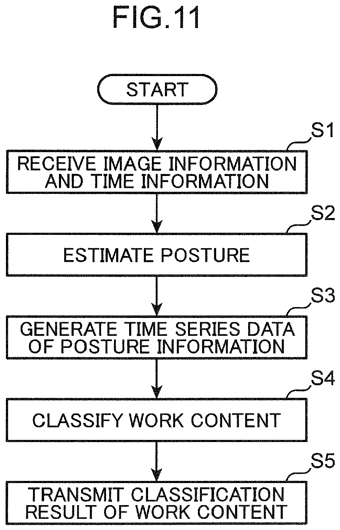

As illustrated in FIG. 11, the posture estimation unit 41 of the image processing device 40 acquires data regarding the image output from each camera 30. The work content determination unit 42 of the image processing device 40 acquires time information output from the time stamp unit 50 (step S1).

Next, as illustrated in FIG. 4, the posture estimation unit 41 inputs data regarding the image to the neural network (posture estimation algorithm), and the neural network extracts and outputs coordinates of each of the plurality of feature points based on the image to be input. The posture estimation unit 41 estimates a posture (boom angle) of the boom 104, a posture (arm angle) of the arm 105, a posture (bucket angle) of the bucket 106, and a posture (slewing angle) of the lower travelling body 101 and the upper slewing body 102 based on coordinates of the plurality of feature points having been output (step S2). Data (posture information) regarding the posture estimated by the posture estimation unit 41 is input to the work content determination unit 42.

Next, the work content determination unit 42 gives time information to the posture information corresponding to each image based on the posture information corresponding to each image and time information to be input from the time stamp unit 50. The time information is given to each piece of periodic posture information obtained at predetermined time intervals. Due to this, the work content determination unit 42 creates time-series data of the posture as illustrated in FIG. 5 (step S3).

Next, as illustrated in FIG. 7, the work content determination unit 42 inputs time-series data of the posture to the neural network (work classification algorithm), and an output layer of the neural network outputs a score for each of the plurality of work content candidates. The work content determination unit 42 decides, as the work content, the work content candidate having the highest score based on the score of each of the plurality of work content candidates having been output (step S4). The work content is determined for all time-series data of the posture. As a result, various work contents performed by each construction machine 100 within a certain period of time (e.g., one day) are determined.

Next, the work content determination unit 42 generates a work classification as illustrated in FIG. 8 regarding various work contents performed in a certain period of time. The image processing device 40 transmits data of work content including the work classification to the server 60 (step S5).

Note that the processing of steps SI to S5 is performed from when the construction machine 100 is turned on to when turned off.

### [Modifications]

The present invention is not limited to the embodiment described above. The present invention can include the following aspects, for example.

### (A) Regarding image-capturing device

In the above embodiment, the image-capturing device (camera 30) is disposed at a position where an image including the construction machine 100 at the work site can be acquired, and is not attached to the construction machine 100, but the present invention is not limited thereto. In the present invention, the image-capturing device may be attached to the construction machine 100. A specific explanation is as follows.

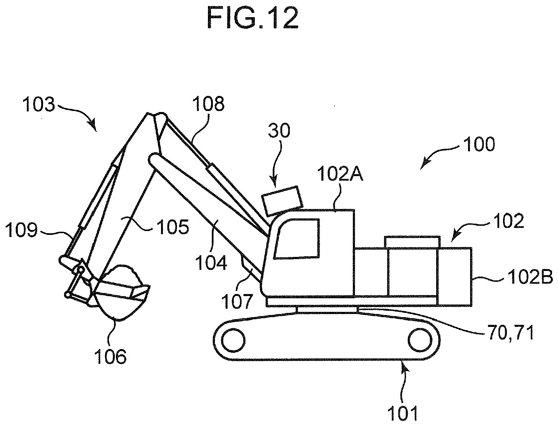

FIG. 12 is a view for explaining the camera 30 attached to the machine body of the construction machine 100 in the work content determination system 20 according to a modification of the embodiment. In this modification, the camera 30 is attached to a cab 102A of the upper slewing body 102, and is disposed at a position where an image including the boom 104, the arm 105, and the bucket 106 can be acquired.

In this modification, as illustrated in FIG. 12, the work content determination system 20 further includes a slewing angle sensor 70 that is attached to the machine body of the construction machine 100 and detects a slewing angle of the upper slewing body with respect to the base body, and a slewing body posture determination unit 71 that determines a posture of the upper slewing body 102 based on the slewing angle detected by the slewing angle sensor 70. As the slewing angle sensor 70, for example, a sensor such as a gyro sensor, an encoder, and a resolver can be used, but the sensor is not limited thereto. The slewing body posture determination unit 71 may be a function included in a computer not illustrated of the construction machine 100, may be a function included in the computer of the image processing device 40, or may be a function included in a computer provided separately from these computers.

In this modification, postures of the boom 104 and the arm 105 that are most susceptible to impact during work of the construction machine 100 are estimated based on the image similarly to the above-described embodiment. On the other hand, a posture of the machine body that is less susceptible to impact than the boom 104 and the arm 105 during work of the construction machine 100, specifically, a posture (slewing angle) of the upper slewing body 102 with respect to the lower travelling body 101 is determined based on the slewing angle detected by the slewing angle sensor 70 attached to the upper slewing body 102. In this aspect, as compared with a case where the posture of the upper slewing body 102 is determined based on the image, the posture of the upper slewing body 102 is more accurately determined by the slewing angle sensor 70, and moreover, it is possible to minimize the necessity of newly mounting a sensor for determining the work content of the construction machine 100 on the construction machine 100.

### (B) Regarding server

The above-described functions of the server 60 may be included in the image processing device 40, and in this case, the server 60 can be omitted.

### (C) Regarding construction machine

The tip end attachment is not limited to the bucket, and may be another tip end attachment such as a grapple, a crusher, a breaker, and a fork. The construction machine is not limited to the hydraulic excavator, and may be another construction machine. In the above embodiment, the base body is the lower travelling body 101. However, the base body is not limited to the one that can travel like the lower travelling body 101, and may be a base that is installed at a specific place and supports the upper slewing body 102.

### (D) Regarding determination of work content

In the above embodiment, the posture estimation unit 41 estimates the posture of the construction machine 100 based on the image acquired by the image-capturing device 30, and the work content determination unit 42 determines the work content based on a time-series change in the posture estimated by the posture estimation unit 41. However, the present invention is not limited thereto. In the present invention, the posture estimation unit 41 may be omitted, and the work content determination unit 42 may determine the work content based on a time-series change in the image acquired by the image-capturing device 30.

In the above embodiment, determination of the work content is performed using a neural network (posture estimation algorithm and work classification algorithm) machine-learned in advance, but the present invention is not limited thereto. In the present invention, determination of the work content of the construction machine only needs to be performed based on a time-series change in the image acquired by the image-capturing device, and may be performed by a method other than the method using the neural network. Examples of the other method include a method using machine learning other than the method using the neural network, and time series algorithm.

Features of the above-described embodiment are summarized as follows.

A work content determination system according to one aspect of the present invention is a work content determination system for determining a work content of a construction machine at a work site, the system including: an image-capturing device that acquires an image including the construction machine at the work site; and an image processing device that determines the work content of the construction machine based on a time-series change in the image acquired by the image-capturing device and outputs the work content.

In this aspect, the image processing device determines a work content of the construction machine based on a time-series change in the image acquired by the image-capturing device, and outputs the work content. This makes it possible to determine the work content of a construction machine while not requiring a sensor for determining the work content of the construction machine to be newly mounted on the construction machine or minimizing the necessity of newly mounting the sensor on the construction machine.

In the above aspect, the work content determination system preferably further includes a work history storage unit that stores, as a history, the work content output from the image processing device.

In this aspect, work-related persons such as an orderer who orders work at the work site, a manager who manages work at the work site, and an operator who performs work at the work site can perform grasping, analysis, and the like of the work content based on the work content stored as a history in the work history storage unit.

In the above aspect, the image processing device preferably includes a posture estimation unit that estimates a posture of the construction machine based on the image acquired by the image-capturing device, and a work content determination unit that determines the work content based on a time-series change in the posture estimated by the posture estimation unit.

In this aspect, the work content of the construction machine can be determined based on a dynamic change in posture of the construction machine. Specifically, the work of the construction machine includes, for example, drilling work, grading work, slope shaping work, and loading work, and each of these works is performed with a specific time-series change in terms of the posture of the construction machine. Therefore, a time-series change in the posture of the construction machine is relevant to the work content of the construction machine, and serves as an index for determination of the work content.

In the above aspect, it is preferable that the construction machine includes a machine body, a boom supported by the machine body in a hoisting manner, and an arm rotatably coupled to a tip end portion of the boom, and the posture estimation unit estimates a posture of the boom and a posture of the arm based on the image acquired by the image-capturing device.

This aspect makes it possible to estimate a posture of the boom and a posture of the arm based on the image and determine the work content based on a time-series change in these postures even without a sensor for determining a work content being attached to the boom and the arm that are most susceptible to impact during work of the construction machine.

In the above aspect, the image-capturing device may include a camera that is attached to the machine body and is disposed at a position where an image including the boom and the arm can be acquired.

In this aspect, since the camera is attached to the machine body of the construction machine, the camera can acquire an image including the boom and the arm of the construction machine regardless of a position, an orientation, and a posture of the construction machine at a work site. This makes it possible to suppress variations in accuracy of determination of the work content depending on a position, an orientation, and a posture of the construction machine.

In the above aspect, the machine body may include a base body and an upper slewing body supported by the base body in a slewing manner, and the work content determination system may further include a slewing angle sensor that is attached to the machine body and detects a slewing angle of the upper slewing body with respect to the base body, and a slewing body posture determination unit that determines a posture of the upper slewing body based on the slewing angle detected by the slewing angle sensor.

In this aspect, whilst postures of the boom and the arm that are most susceptible to impact during work of the construction machine are estimated based on the image, a posture of the machine body that is less susceptible to impact than the boom and the arm during work of the construction machine, specifically, a posture of the upper slewing body with respect to the base body is determined based on the slewing angle detected by the slewing angle sensor attached to the machine body. In this aspect, as compared with a case where the posture of the upper slewing body is determined based on the image, the posture of the upper slewing body is more accurately determined by the slewing angle sensor, and moreover, it is possible to minimize the necessity of newly mounting a sensor for determining the work content of the construction machine on the construction machine.

In the above aspect, it is preferable that the image processing device stores a plurality of work content candidates defined in advance, and selects, as the work content, any work content candidate from among the plurality of work content candidates based on a time-series change in the image acquired by the image-capturing device.

The work content of the construction machine is often limited to several types of work such as drilling work, grading work, slope shaping work, and loading work. Then, each of these works is performed with a specific time-series change in terms of the operation of the construction machine. Therefore, in this aspect, it is possible to determine the work content from limited options, i.e., the plurality of work content candidates defined in advance, based on a time-series change in an image corresponding to an operation specific to each work content, and thus, it is easy to construct the work content determination system.

A work determination method according to one aspect of the present invention is a method for determining a work content of a construction machine at a work site, the method including: acquiring an image including the construction machine at the work site; determining the work content of the construction machine based on a time-series change in the image to be acquired; and outputting the work content.

In this aspect, the work content of the construction machine is determined based on a time-series change in the image to be acquired, and the work content is output. This makes it possible to determine the work content of a construction machine while not requiring a sensor for determining the work content of the construction machine to be newly mounted on the construction machine or minimizing the necessity of newly mounting the sensor on the construction machine.

## Claims

1. A work content determination system for determining a work content of a construction machine at a work site, the system comprising:
an image-capturing device that acquires an image including the construction machine at the work site; and
an image processing device that determines the work content of the construction machine based on a time-series change in the image acquired by the image-capturing device and outputs the work content.

2. The work content determination system according to claim 1, further comprising:
a work history storage unit that stores, as a history, the work content output from the image processing device.

3. The work content determination system according to claim 1 or 2, wherein
the image processing device includes
a posture estimation unit that estimates a posture of the construction machine based on the image acquired by the image-capturing device, and
a work content determination unit that determines the work content based on a time-series change in the posture estimated by the posture estimation unit.

4. The work content determination system according to claim 3, wherein
the construction machine includes a machine body, a boom supported by the machine body in a hoisting manner, and an arm rotatably coupled to a tip end portion of the boom, and
the posture estimation unit estimates a posture of the boom and a posture of the arm based on the image acquired by the image-capturing device.

5. The work content determination system according to claim 4, wherein
the image-capturing device includes a camera that is attached to the machine body and is disposed at a position where an image including the boom and the arm can be acquired.

6. The work content determination system according to claim 4 or 5, wherein
the machine body includes a base body and an upper slewing body supported by the base body in a slewing manner, and
the work content determination system further includes
a slewing angle sensor that is attached to the machine body and detects a slewing angle of the upper slewing body with respect to the base body, and
a slewing body posture determination unit that determines a posture of the upper slewing body based on the slewing angle detected by the slewing angle sensor.

7. The work content determination system according to any one of claims 1 to 6, wherein
the image processing device stores a plurality of work content candidates defined in advance, and selects, as the work content, any work content candidate from among the plurality of work content candidates based on a time-series change in the image acquired by the image-capturing device.

8. A work determination method for determining a work content of a construction machine at a work site, the method comprising:
acquiring an image including the construction machine at the work site;
determining the work content of the construction machine based on a time-series change in the image to be acquired; and
outputting the work content.
